# EUROPEAN PATENT APPLICATION

(11) **EP 4 455 387 A1**
(43) Date of publication of application: **30.10.2024**
(21) Application number: 23737392.3
(22) Date of filing: 05.01.2023
(51) Int. Cl.: D06F 34/05, D06F 34/30, D06F 34/32, D06F 34/34, D06F 31/00, H04W 4/30, H04W 4/80, H04W 88/02, D06F 105/58

(54) **LAUNDRY TREATING APPARATUS**

(30) Priority: 05.01.2022 KR 20220001405
(71) Applicant: LG Electronics Inc., Yeongdeungpo-gu Seoul 07336 (KR)
(72) Inventor: HWANG, Jeongwon, Seoul 08592 (KR); SHIN, Hyosang, Seoul 08592 (KR); CHOI, Hongki, Seoul 08592 (KR)
(74) Representative: Vossius & Partner Patentanwälte Rechtsanwälte mbB
(86) International application number: PCT/KR2023/000195
(87) International publication number: WO 2023/132644

(57) **Abstract**

A laundry treating apparatus is disclosed. The laundry treating apparatus according to one embodiment of the present invention comprises: a cabinet; a drum which is rotatably provided inside the cabinet and which accommodates laundry; a control unit which is provided in the cabinet and which performs a treatment course for treating the laundry; an input unit which is provided at the cabinet, and into which a command is input by a user; and an output unit which is provided at the cabinet, and which outputs a screen for providing information to the user, wherein the control unit performs a pairing control mode for controlling an external device positioned outside the cabinet so that an external treatment course for treating the laundry is performed, and the output unit outputs, simultaneously with the other output unit provided at the external device, a course selection screen on which the external treatment course is set through the input unit in the pairing control mode.

## Description

### [Technical Field]

The present disclosure relates to a laundry treating apparatus, and more particularly, relates to a laundry treating apparatus for treating laundry.

### [Background]

A laundry treating apparatus is an apparatus that may perform various treatment courses to treat laundry, such as a washing course that puts clothes, bedding, and the like (hereinafter, referred to as laundry) into a drum and removes contaminants from the laundry, a drying course to remove moisture present in the laundry, and the like.

The laundry treating apparatus may include a cabinet that forms an outer appearance thereof, and may include the drum disposed inside the cabinet to accommodate the laundry therein. Additionally, when water is used in the treatment course of the laundry, a tub may be disposed inside the cabinet, and the drum may be installed inside the tub.

The laundry treating apparatuses may be categorized into a top loading type and a front loading type based on a scheme of putting the laundry into the drum. The top loading type may put the laundry via a top surface of the cabinet, and the front loading type may put the laundry via a front surface of the cabinet.

Referring to Korean Patent Application Publication No. 10-2020-0014029, a system emerged in which one laundry treating apparatus and a further laundry treating apparatus are respectively equipped with communication modules and are able to be in communication with each other.

As a result, one of the separate laundry treating apparatuses was able to receive information, a state, or the like of a treatment course performed by the further treating apparatus and perform a treatment course of the laundry appropriate thereto.

In one example, the separate laundry treating apparatuses may be positioned to be spaced apart from each other depending on a usage environment, and further, one of the separate laundry treating apparatuses may be installed at a location that is difficult for a user to directly manipulate the corresponding apparatus.

For example, the separate laundry treating apparatuses may be installed by stacking the further treating apparatus on top of one treating apparatus to increase a space efficiency. In this case, a manipulation unit of the further treating apparatus is positioned too high for the user to directly manipulate the same, which may cause discomfort.

Accordingly, as the plurality of laundry treating apparatuses are used, improving user's convenience in manipulating the plurality of laundry treating apparatuses and further improving ease of use by providing efficient manipulation information to the user in manipulating the plurality of laundry treating apparatuses are important tasks in the present technical field.

### [Summary]

### [Technical Problem]

Embodiments of the present disclosure are to provide a laundry treating apparatus that may improve use convenience for a plurality of laundry treating apparatuses.

Additionally, embodiments of the present disclosure are to provide a laundry treating apparatus that may effectively control a further laundry treating apparatus via one laundry treating apparatus.

Additionally, embodiments of the present disclosure are to provide a laundry treating apparatus that may provide screen information that may improve use convenience of a user while controlling a further laundry treating apparatus via one laundry treating apparatus.

Additionally, embodiments of the present disclosure are to provide a laundry treating apparatus that may provide an efficient treatment course for laundry treatment via mutual information exchange between a plurality of laundry treating apparatuses.

### [Technical Solutions]

A laundry treating apparatus according to an embodiment of the present disclosure may activate a pairing mode via information exchange with an external device corresponding to an external further treating apparatus. Additionally, in the pairing mode, a controller may activate a pairing control mode to directly control the external device via a manipulation unit disposed on a cabinet.

In one example, in the pairing control mode, an output device may simultaneously output a screen output from a further output device disposed on the external device, thereby improving use convenience.

Furthermore, the screen output from the output device may include an indicator to inform a user that a current mode corresponds to the pairing control mode, and when necessary, may create a difference from the screen output from the further output device of the external device, thereby providing convenience to the user.

A laundry treating apparatus according to an embodiment of the present disclosure includes a cabinet, a drum, a controller, an input device, and an output device.

The drum is rotatably disposed inside the cabinet and accommodates laundry therein. The controller is disposed inside the cabinet and performs a treatment course for treating the laundry.

The input device is disposed on the cabinet, and a command is input by a user via the input device. An output device is disposed on the cabinet and outputs a screen providing information to the user.

The controller is located outside the cabinet and activates a pairing control mode to control an external device performing an external treatment course to treat the laundry, and the output device outputs a course selection screen where the external treatment course is set via the input device in the pairing control mode simultaneously with a further output device disposed on the external device.

The output device may output the course selection screen including a pairing control indicator to inform the user that the pairing control mode is activated. The further output device may output the course selection screen output not including the pairing control indicator.

When a change in an option is input via the input device or a user's terminal on the course selection screen, the output device may output an option setting screen for changing a setting value of the option and the further output device may maintain the course selection screen.

The course selection screen may display the setting value of the option, and when the output device returns to the course selection screen from the option setting screen, the setting value displayed on the course selection screen of the further output device may be changed to a value determined on the option setting screen of the output device.

An option unchangeable via manipulation of the input device or the terminal may be displayed in a deactivated state in the pairing control mode. When a pairing control request for the external device is input from the input device or a user's terminal, the output device may output a pairing start indicator indicating start of the pairing control mode for a set time.

The pairing start indicator may be output in a pop-up form on the screen currently output on the output device. When the further output device outputs a course performance screen displaying a progress of the external treatment course in the pairing control mode, the output device may output an operation notification screen displaying that the external device is operating.

The operation notification screen may include a pause indicator indicating that the operation of the external device is able to be paused via the input device or a user's terminal.

When a pause request is input via the input device or the user's terminal while the operation notification screen is output, the output device may output a pause screen of the external device together with the further output device.

When a pairing control request is input via the input device or a user's terminal in a paired state where communication with the external device is permitted, the controller may activate the pairing control mode.

When the pairing control request is input via the input device or the terminal in a sleep state of the external device, the controller may make a request for a wake-up state to a further controller disposed in the external device to perform the pairing control mode.

The external treatment course may include a plurality of external treatment courses set on the external device, and after the treatment course is performed in the paired state, a recommended external treatment course recommended based on the treatment course among the plurality of external treatment courses may be suggested to the user via the output device, the further output device, or the terminal.

An embodiment of the present disclosure may further include a tub disposed inside the cabinet, wherein the drum is installed inside the tub, wherein the tub accommodates water therein. The treatment course of the controller may correspond to a washing course for washing the laundry, and the external treatment course of the external device may correspond to a drying course for drying the laundry.

### [Advantageous Effects]

The embodiments of the present disclosure may provide the laundry treating apparatus that may improve the use convenience for the plurality of laundry treating apparatuses.

Additionally, the embodiments of the present disclosure may provide the laundry treating apparatus that may effectively control the further laundry treating apparatus via one laundry treating apparatus.

Additionally, the embodiments of the present disclosure may provide the laundry treating apparatus that may provide the screen information that may improve the use convenience of the user while controlling the further laundry treating apparatus via one laundry treating apparatus.

Additionally, the embodiments of the present disclosure may provide the laundry treating apparatus that may provide the efficient treatment course for the laundry treatment via the mutual information exchange between the plurality of laundry treating apparatuses.

### [Brief Description of the Drawings]

FIG. 1 is a perspective view showing a laundry treating apparatus according to an embodiment of the present disclosure.
FIG. 2 is a diagram showing a manipulation unit disposed on a laundry treating apparatus according to an embodiment of the present disclosure.
FIG. 3 is a cross-sectional view showing the interior of a laundry treating apparatus including a tub according to an embodiment of the present disclosure.
FIG. 4 is a cross-sectional view showing the interior of a laundry treating apparatus with a tub omitted according to an embodiment of the present disclosure.
FIG. 5 is a diagram schematically showing a communication relationship of a laundry treating apparatus according to an embodiment of the present disclosure.
FIG. 6 is a diagram showing a laundry treating apparatus and an external device arranged in parallel with each other according to an embodiment of the present disclosure.
FIG. 7 is a diagram showing a laundry treating apparatus and an external device arranged in series with each other according to an embodiment of the present disclosure.
FIG. 8 is a diagram showing a course selection screen output in a pairing control mode by a laundry treating apparatus according to an embodiment of the present disclosure.
FIG. 9 is a diagram showing an option setting screen output in a pairing control mode by a laundry treating apparatus according to an embodiment of the present disclosure.
FIG. 10 is a diagram showing a state in which a laundry treating apparatus according to an embodiment of the present disclosure displays a deactivated option in a pairing control mode on a screen.
FIG. 11 is a diagram showing a state in which a laundry treating apparatus according to an embodiment of the present disclosure displays a deactivated option in a pairing control mode on an option setting unit.
FIG. 12 is a diagram showing a course performance screen output in a pairing control mode by a laundry treating apparatus according to an embodiment of the present disclosure.
FIG. 13 is a diagram showing a connection relationship between a treatment course of a laundry treating apparatus and an external treatment course of an external device according to an embodiment of the present disclosure.

### [Best Mode]

Hereinafter, with reference to the attached drawings, embodiments of the present disclosure will be described in detail such that those skilled in the art may easily practice them.

However, the present disclosure may be implemented in several different forms and may not be limited to the embodiments described herein. Further, to clearly illustrate the present disclosure in the drawings, parts unrelated to the description are omitted, and similar drawing numerals are assigned to similar parts throughout the present document.

In the present document, redundant descriptions of the same components are omitted.

Further, in the present document, when a component is referred to as being 'connected' to another component, it should be understood that the components may be directly connected to each other, but there may be another component therebetween. On the other hand, in the present document, when a component is referred to as being 'directly connected' to another component, it should be understood that there is no other component therebetween.

Additionally, the terms used herein are merely used to describe specific embodiments and are not intended to limit the present disclosure.

Further, as used herein, singular expressions may include plural expressions, unless the context clearly dictates otherwise.

In addition, in the present document, it should be understood that terms such as 'include' or 'have' are only intended to indicate the presence of features, numbers, steps, operations, components, parts, or combinations thereof described herein, and do not preclude the presence or addition of other features, numbers, steps, operations, components, parts, or combinations thereof.

Further, in the present document, the term 'and/or' includes a combination of a plurality of listed items or any of the plurality of listed items. As used herein, 'A or B' may include 'A', 'B', or 'both A and B'.

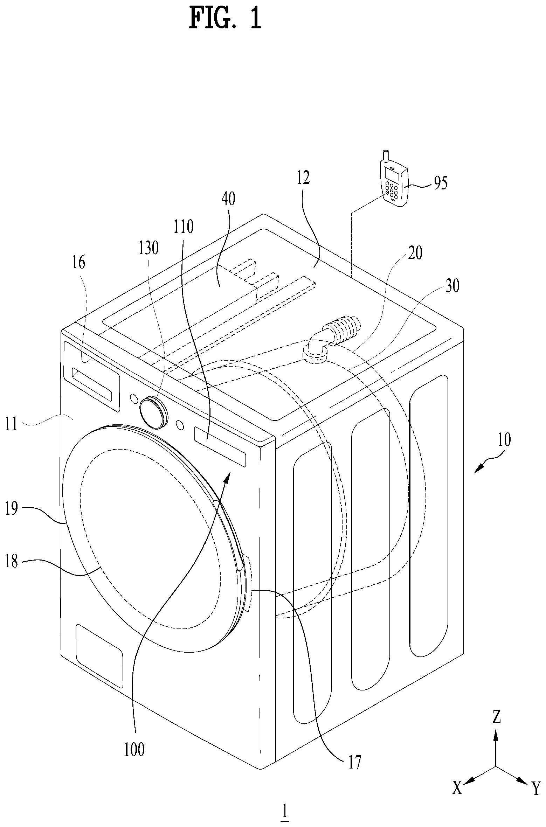

FIG. 1 shows a laundry treating apparatus 1 according to an embodiment of the present disclosure. Referring to FIG. 1, an embodiment of the present disclosure includes a cabinet 10. The cabinet 10 forms an outer appearance of the laundry treating apparatus 1, and defines a space in which a drum 30, which will be described later, or the like is accommodated therein.

The cabinet 10 may have various shapes as needed, such as a polygonal pillar or a circular pillar. When the cabinet 10 is formed in a rectangular parallelepiped shape as shown in FIG. 1, the cabinet 10 may be formed by coupling a plurality of panels to each other or by integrally molding and bending the plurality of panels.

When the cabinet 10 includes the plurality of panels, the plurality of panels may include a front panel 11, a rear panel, a top panel 12, a bottom panel 13, and a pair of side panels.

A laundry inlet 18 to allow laundry to be introduced into the cabinet 10 may be defined in the cabinet 10. The laundry inlet 18 may be defined in one surface of the cabinet 10 and may serve as an entrance for a user to insert the laundry into the cabinet 10.

The laundry inlet 18 may be defined in the front panel 11 or the top panel 12 of the cabinet 10. That is, in an embodiment of the present disclosure, the laundry inlet 18 may be defined in the front panel 11 and thus a front loading type may be employed, or the laundry inlet 18 may be defined in the top panel 12 and thus a top loading type may be employed.

FIG. 1 shows the front loading-type laundry treating apparatus 1 in which the laundry inlet 18 is defined in the front panel 11 of the cabinet 10, but the top loading-type may be employed when necessary.

The cabinet 10 may include a laundry door 19 for opening and closing the laundry inlet 18. The laundry door 19 may be disposed on the cabinet 10 in various ways to open and close the laundry inlet 18. FIG. 1 shows that the laundry door 19 is hinged to the cabinet 10 such that one side thereof is pivotable according to an embodiment of the present disclosure.

The laundry door 19 may be pivoted around a hinge to determine the opening and closing of the laundry inlet 18. For example, the laundry door 19 may open the laundry inlet 18 by pivoting around the hinge to be away from the cabinet 10, and close the laundry inlet 18 by pivoting around the hinge to come into close contact with the cabinet 10.

The cabinet 10 may include a door lock 17 for locking the laundry door 19. The door lock may secure the laundry door 19 such that the state in which the laundry door 19 closes the laundry inlet 18 is maintained.

An embodiment of the present disclosure may include a controller 90, and the controller 90 may be connected in a signal manner to the door lock 17 to control an operating state of the door lock 17, thereby controlling the closed state of the laundry door 19.

For example, the door lock 17 may be controlled by the controller 90 to secure the laundry door 19 in the locked state such the closed state of the laundry door 19 does not change to the open state. When the door lock 17 is unlocked, the laundry door 19 may be automatically pivoted to open the laundry inlet 18, or may be freely manipulated to the open state by the user.

The cabinet 10 may have a manipulation unit 100, and the manipulation unit 100 may include an input device 110 and an output device 130. FIG. 1 shows the manipulation unit 100 disposed at an upper side of the front panel 11, but a location, a shape, the number, and the like of the manipulation unit 100 may vary depending on need.

The manipulation unit 100 may be a means of exchanging signals or information between the user and the laundry treating apparatus 1, for example, the controller 90. A detailed description of the manipulation unit 100 will be made later.

FIG. 1 schematically shows a detergent supplier 40, the drum 30, a tub 20, and the like disposed inside the cabinet 10.

The tub 20 may be disposed inside the cabinet 10 and may accommodate water therein. The tub 20 may be constructed in the laundry treating apparatus 1 to use a large amount of water for treating the laundry, such as a washing course, a rinsing course, and the like.

In other words, when the laundry treating apparatus 1 according to an embodiment of the present disclosure is constructed to perform a treatment course of the laundry using washing water, such as the washing course, the tub 20 may be disposed inside the cabinet 10 and the drum 30 may be installed inside the tub 20.

However, when the laundry treating apparatus 1 is constructed to perform only a treatment course that does not require the use of washing water, such as a drying course to remove moisture from the laundry, unlike the washing course, the tub 20 may be omitted. In other words, the laundry treating apparatus 1 may not have the tub 20 but only have the drum 30.

The drum 30 may be disposed inside the cabinet 10 and may accommodate the laundry therein. That is, the laundry that is introduced into the cabinet 10 via the laundry inlet 18 may be accommodated inside the drum 30 and undergo various treatment courses. A detailed description of the tub 20 and the drum 30 will be made later.

An embodiment of the present disclosure may include the detergent supplier 40. The detergent supplier 40 may provide detergent, which is to create and enhance a washing effect in the washing course or the like to remove contaminants from the laundry, into the drum 30.

The laundry treating apparatus 1 according to an embodiment of the present disclosure may be in communication with a user's terminal 95. The user's terminal 95 may refer to a device through which the user may input or receive information while away from the laundry treating apparatus 1. For example, a mobile phone, a computer, and the like that the user may carry may correspond to the terminal 95.

An embodiment of the present disclosure may establish the communication with the terminal 95 via the controller 90, and the information may be transmitted and received. A detailed description of the communication with the terminal 95 or the like will be made later.

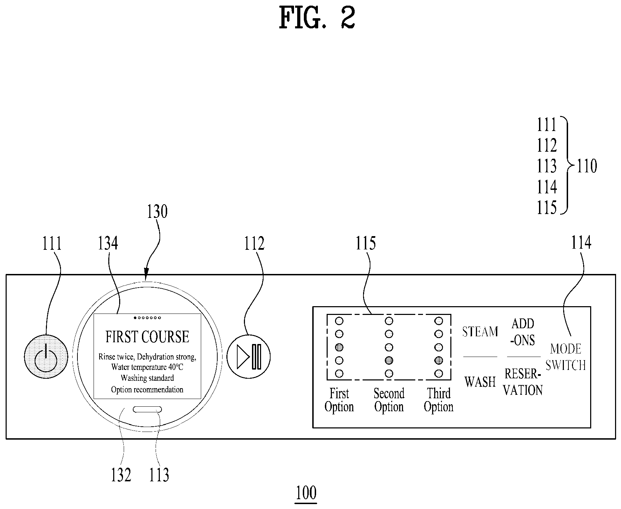

FIG. 2 shows the manipulation unit 100 according to an embodiment of the present disclosure. The manipulation unit 100 may include the input device 110 that generates an input signal when manipulated by the user, and the output device 130 that provides various information to the user in response to an output signal of the controller 90.

The manipulation unit 100 may include the input device 110 and/or the output device 130, and the input device 110 and the output device 130 may be located together or separated from each other. The input device 110 and the output device 130 may respectively include a plurality of input devices and a plurality of output devices, and may be disposed at various locations of the cabinet 10.

FIG. 2 shows the manipulation unit 100 in which the input device 110 and the output device 130 are disposed together and constructed as one control panel according to an embodiment of the present disclosure. Referring to FIG. 2, the output device 130 may include a display 134 that outputs a screen to provide visual information to the user.

Specifically, the output device 130 may include a screen peripheral portion 132 that surrounds the display 134 and the display 134 located on the screen peripheral portion 132, and may be connected to the controller 90 and output the screen providing necessary information to the user via the display 134. Additionally, the output device 130 may further include a speaker for providing an auditory signal, such as various notification sounds, to the user.

The input device 110 may be manipulated by the user to generate various input signals. For example, the input device 110 may include components such as buttons that are physically manipulated by the user, touch-based components that generate signals by being in contact with a user's hand or the like, and microphones that receive a voice signal or the like from the user.

In the present disclosure, the buttons include a physical button that is manipulated by the user to generate a physical change, and a touch button that generates an electrical signal as the user's hand or the like comes into contact therewith. In other words, in the present disclosure, buttons may be formed with various types and shapes depending on need.

Referring to FIG. 2, the input device 110 may include a power button 111. When the power button 111 is pressed, power may be applied to various components disposed in the laundry treating apparatus 1.

The laundry treating apparatus 1 according to an embodiment of the present disclosure may be connected to an external power source and maintain a standby state or a sleep state in which power is not applied to remaining components except for some components, and then when the power button 111 is manipulated, may be switched to a power-on state or a wake-up state in which preparation to perform the treatment course of the laundry is made as the power is also applied to the remaining components.

An embodiment of the present disclosure may include a power standby unit that receives the power from the external power source at all times regardless of the standby state and the power-on state, and the power standby unit may allow the power application to other components such as the as controller 90 when the power button 111 is pressed in the sleep state.

In one example, the input device 110 may include a display button 113. The display button 113 may be disposed in the screen peripheral portion 132 of the output device 130 or may be disposed around the same. Additionally, the display button 113 may be replaced with a scheme of touching the display 134.

A command based on screen information output from the display 134 may be input via the display button 113. For example, the user may manipulate the display button 113 to select a specific area or one item of the screen output on the display 134.

Additionally, the input device 110 may include a movement button. The movement button may be disposed on or around the screen peripheral portion 132. The movement button may be replaced with a jog disposed on the screen peripheral portion 132 or the like and rotated, or may be replaced with the scheme of touching the display 134.

The user may change an object to be selected among a plurality of items on the screen output on the display 134 by manipulating the movement button.

The input device 110 may include a perform button 112. The perform button 112 may also be defined as a pause button. An embodiment of the present disclosure may perform the various treatment courses for treating the laundry accommodated inside the drum 30 via control of the controller 90 or the like. The user may manipulate the perform button 112 to perform or pause the treatment course.

In one example, the input device 110 may include a pairing control button 114. The laundry treating apparatus 1 according to an embodiment of the present disclosure may activate a pairing mode in which communication with another external device, such as an external device 2, is allowed to enable information exchange therebetween, and may activate a pairing control mode to directly control the external device 2 in the pairing mode.

In other words, when the pairing control mode is activated, the user may use the input device 110 or the like disposed on the cabinet 10 according to an embodiment of the present disclosure to control operation of the external device 2 paired with the laundry treating apparatus 1 according to an embodiment of the present disclosure.

In other words, in an embodiment of the present disclosure, the controller 90 may activate the pairing mode in which it is allowed to be in communication with the external device 2 located outside the cabinet 10 to exchange information therewith. The controller 90 may activate the pairing mode while being in communication with a further controller 3 of the external device 2.

In the pairing mode, when the user presses the pairing control button 114 of the input device 110, the controller 90 may activate the pairing control mode of directly transmitting a command to the further controller 3 of the external device 2 via the input device 110. In one example, the controller 90 may also be subjected to pairing control by the further controller 3 of the external device 2.

In one example, the input device 110 may include an option setting unit 115. In an embodiment of the present disclosure, the user may adjust setting values for a plurality of options by manipulating the option setting unit 115.

Specifically, in an embodiment of the present disclosure, the controller 90 may be in a state in which the various treatment courses for treating the laundry are preset.

For example, the plurality of treatment courses may include the washing course to remove the contaminants from the laundry, the rinsing course to rinse the laundry, a dehydration course to remove moisture from the laundry via a physical scheme such as a centrifugal force, the drying course to remove moisture from the laundry via a phase change such as evaporation of water.

In one example, each of the plurality of treatment courses may include a plurality of adjustable options. Each of the plurality of options may have a plurality of option values that the user may select, and one of the plurality of option values may be applied as a setting value for the corresponding option.

The user may manipulate the option setting unit 115 to change setting values of options for which change of the setting value is permitted. That is, each option may be set to have an initial setting value before being changed by the user, and the user may change a setting value of a specific option from the initial setting value to another option value via the option setting unit 115.

The option setting unit 115 may include a plurality of buttons for changing each option, and may be controlled by the controller 90 such that manipulation is permitted for options that may be changed by the user in a currently selected treatment course, and signal generation is inhibited for options that the user is not able to change.

For example, the controller 90 may reflect the change in the option that may be changed by the user for the currently selected treatment course, but may ignore the corresponding command when the change of the option that the user is not able to change is input.

The input device 110 according to an embodiment of the present disclosure may include various buttons for use convenience of the user in addition to the plurality of buttons mentioned above.

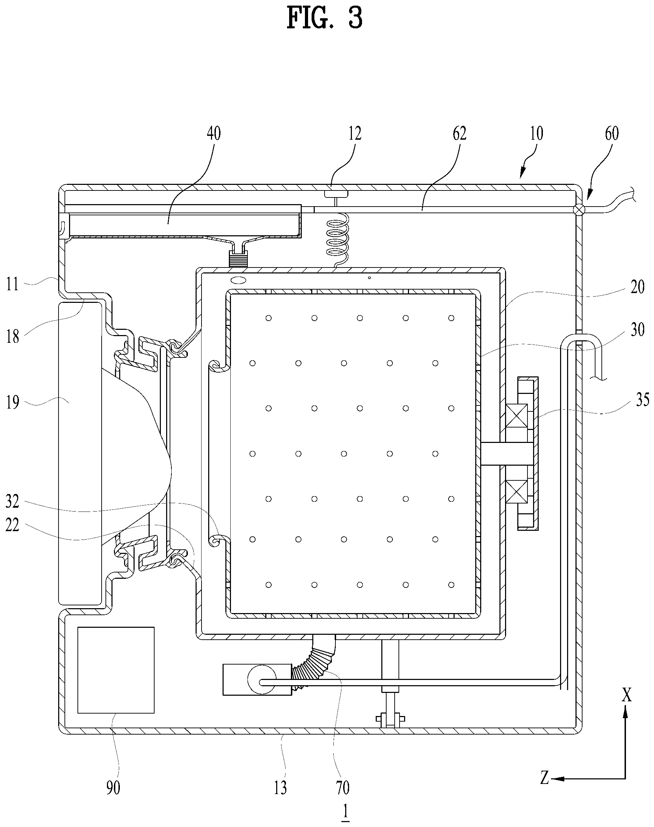

FIG. 3 shows the laundry treating apparatus 1 including the tub 20 and the detergent supplier 40 in an embodiment of the present disclosure.

Referring to FIG. 3, when the washing course of the like of the laundry is performed in the laundry treating apparatus 1 according to an embodiment of the present disclosure, the laundry treating apparatus 1 may include the tub 20, the detergent supplier 40, and the like.

Referring to FIG. 3, the tub 20 may be disposed inside the cabinet 10, may define an internal space therein to accommodate water, and may have various shapes. A tub inlet 22 facing the laundry inlet 18 of the cabinet 10 may be defined in one surface of the tub 20.

For example, the tub 20 may have a cylindrical shape with the space defined therein, and the tub inlet 22 may be defined in a front surface of the tub 20 facing the laundry inlet 18. The laundry input via the laundry inlet 18 may be put into the tub 20 via the tub inlet 22.

The drum 30 may be disposed inside the tub 20. The drum 30 may have various shapes with a space defined therein. The drum 30 may be rotatable by a driver 35.

The driver 35 may be disposed outside the tub 20, and the drum 30 may have a rotation shaft connected to a rear surface thereof. The driver 35 may be directly connected to the rotation shaft or indirectly connected thereto via a belt or the like.

The drum 30 may be rotatably disposed inside the tub 20, and may have a drum inlet 32 facing the tub inlet 22 in one surface thereof. That is, the inside of the drum 30 may be in communication with the outside via the drum inlet 32, the tub inlet 22, and the laundry inlet 18.

Accordingly, the laundry input by the user via the laundry inlet 18 may be accommodated inside the drum 30 after passing through the laundry inlet 18, the tub inlet 22, and the drum inlet 32. The laundry inlet 18, the tub inlet 22, and the drum inlet 32 may be aligned in a direction parallel to the rotation shaft of the drum 30.

The drum 30 may have a circular cross-section to facilitate rotation around the rotation shaft. For example, the drum 30 may be formed in a cylindrical shape. Additionally, a plurality of through-holes may be defined in a circumferential surface of the drum 30.

The drum 30 installed inside the tub 20 that accommodates water therein may allow water inside the tub 20 to flow into the drum 30 via the through-holes, thereby providing water to the laundry.

An embodiment of the present disclosure may include a water supplier 60. The water supplier 60 may be connected to an external water source disposed outside the cabinet 10, such as an urban water source, and supply water into the cabinet 10.

The water supplier 60 may include a water supply valve to regulate a flow of water, and water introduced from outside the cabinet 10 may flow along a water supply pipe 62 and be directly supplied into the tub 20 or may be supplied to the detergent supplier 40.

The detergent supplier 40 may store detergent therein, and may supply the detergent into the tub 20 or the drum 30. When the water supply pipe 62 is connected to the detergent supplier 40, the detergent supplier 40 may supply water supplied via the water supply pipe 62 and the detergent together into the tub 20.

An embodiment of the present disclosure may include a drainage 70. The controller 90 may perform a drain process by controlling the drainage 70 to discharge water inside the tub 20 to the outside during the washing course or the like.

The drainage 70 may include a drain pipe that is connected to the tub 20 and is for allowing water inside the tub 20 to flow to the outside, may include a drain valve for regulating a flow of water in the drain pipe, and may include a drain pump to generate the flow of water in the drain pipe.

An embodiment of the present disclosure may include the controller 90. The controller 90 may be connected in a signal manner to the various components that consume the power and may control the operation of the respective components. The controller 90 may be divided into a plurality of pieces or include various sub-divided components as needed.

For example, the controller 90 may functionally include a communication unit for communication with the outside or other components, storage for storing information, and an operation unit for information processing. Additionally, the controller 90 may include a sub-controller 90 equipped for each component, and a main controller 90 that is connected in a signal manner to the sub-controller 90 and is responsible for controlling the sub-controller 90.

At least some of the sub-divided components of the controller 90, which are differentiated by function or configuration as described above, may be spatially and functionally integrated with each other as needed. Additionally, at least some of the sub-divided components may be disposed to be spatially separated from each other.

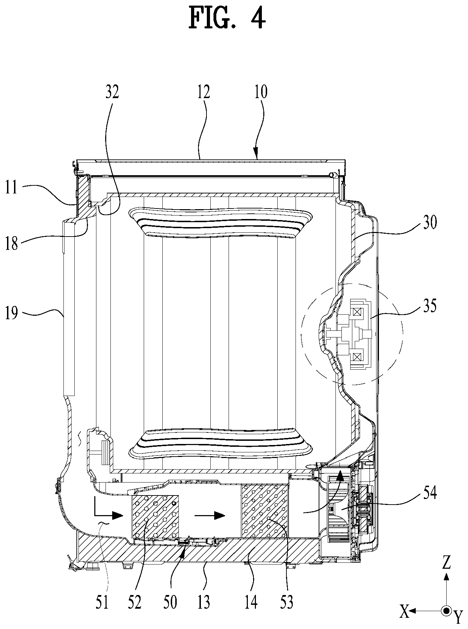

FIG. 4 shows a form in which the tub 20 and the detergent supplier 40 are omitted and the drying course of the laundry is able to be performed according to an embodiment of the present disclosure.

Referring to FIG. 4, in the form in which the tub 20 is omitted, the drum 30 may be rotatably disposed inside the cabinet 10. The driver 35 may be located in one side of the cabinet 10 and may be connected to the drum 30 itself or the rotation shaft of the drum 30 to provide the rotational force to the drum 30.

In one example, a heater 50 to provide high-temperature air to the laundry inside the drum 30 may be disposed inside the cabinet 10. The heater 50 may be installed on a base 14 that is located on the bottom panel 13 and disposed inside the cabinet 10.

FIG. 4 shows the heater 50 disposed outside the drum 30 to provide dehumidified and heated air, and into which air that has passed through the inside of the drum 30 is re-introduced.

Referring to FIG. 4, the heater 50 may include an air passage 51 in communication with the inside of the drum 30. Air containing water vapor generated by evaporation of moisture present in the laundry may exist inside the drum 30, and air inside the drum 30 may be discharged from the drum 30 and flow into the air passage 51. For example, air discharged from the inside of the drum 30 to the outside of the drum 30 via the drum inlet 32 may flow into the air passage 51 and flow along the air passage 51.

In one example, the heater 50 may include a dehumidifying unit 52. The dehumidifying unit 52 may come into contact with air flowing along the air passage 51 to condense water vapor in air and remove water vapor from air. Accordingly, air flowing along the air passage 51 may be dehumidified such that water vapor is greatly reduced as it passes through the dehumidifying unit 52.

The heater 50 may include a temperature increasing unit 53. The temperature increasing unit 53 may be in direct contact with air flowing along the air passage 51 or may be in thermal contact with air to heat air. Air flowing along the air passage 51 may be dried at a high temperature while passing through the dehumidifying unit 52 and the temperature increasing unit 53.

The heater 50 may include a fluid system forming the dehumidifying unit 52 and the temperature increasing unit 53. The fluid system may include a compressor, a condenser, a diffusion valve, and an expander, the dehumidifying unit 52 may correspond to the expander, and the temperature increasing unit 53 may correspond to the condenser.

However, in an embodiment of the present disclosure, the heater 50 is not limited to including the fluid system, and the dehumidifying unit 52 and the temperature increasing unit 53 may be in various schemes.

The heater 50 may include an air fan 54. The air fan 54 may be located in a space in communication with the air passage 51, for example, on the air passage 51 to generate a flow of air. By operating the air fan 54, air inside the drum 30 may flow and circulate through the air passage 51.

That is, in an embodiment of the present disclosure, the heater 50 dehumidifies and heats air flowing along the air passage 51 in communication with the inside of the drum 30 and supplies air back to the inside of the drum 30, thereby providing high-temperature dry air into the drum 30 and removing moisture contained in the laundry.

However, the heater 50 in FIG. 4 is only an example of the heater 50 for performing the drying course. In the present disclosure, a scheme or a type of the heater 50 for providing high-temperature air to the laundry is not necessarily limited as above.

For example, the heater 50 may be of an exhaust type that allows air from outside the cabinet 10 to be introduced and flow into the drum 30, and discharges air inside the drum 30 to the outside. Additionally, the heater 50 may also be of a static type that heats and dehumidifies air inside the drum 30 while not causing the flow of air.

In addition, the laundry treating apparatus 1 shown in FIG. 3 and the laundry treating apparatus 1 shown in FIG. 4 are shown separately for convenience of description, and it goes without saying that the respective components cannot coexist with each other.

For example, an embodiment of the present disclosure may include the water supplier 60, the tub 20, the detergent supplier 40, and the like to perform the washing course of the laundry, and at the same time, include the heater 50 of various types to perform the drying course of the laundry.

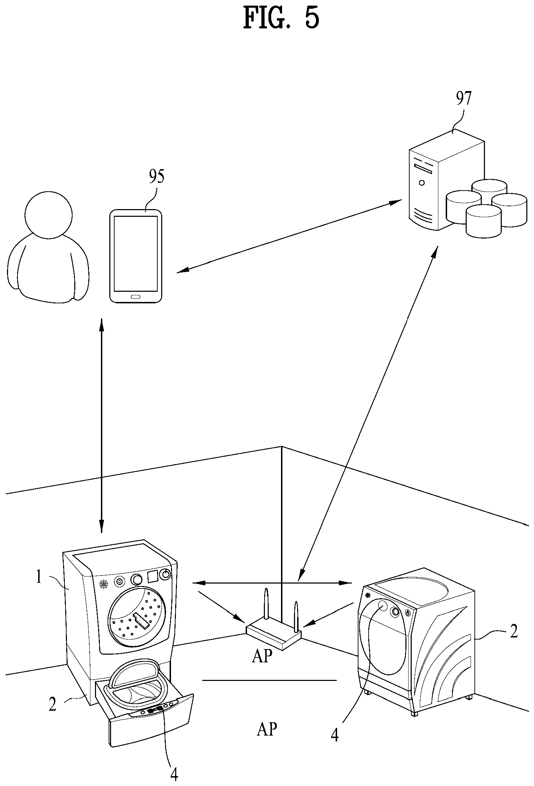

FIG. 5 schematically shows various communication environments that may be established by the laundry treating apparatus 1 according to an embodiment of the present disclosure.

Referring to FIG. 5, the laundry treating apparatus 1 according to an embodiment of the present disclosure may activate the pairing mode with the at least one external device 2. For example, the laundry treating apparatus 1 according to an embodiment of the present disclosure may activate the pairing mode via mutual communication with the external device 2 disposed outside the cabinet 10.

In other words, the controller 90 may activate the pairing mode via communication with the further controller 3 of the external device 2. The controller 90 may activate the pairing mode by exchanging information with the further controller 3 or a further communication unit of the external device 2 via the communication unit.

FIG. 5 shows a connection to the two external devices 2 according to an embodiment of the present disclosure, but the number of external devices 2 that may be connected to the laundry treating apparatus 1 according to an embodiment of the present disclosure may vary.

In an embodiment of the present disclosure, the external device 2 may perform an external treatment course to treat the laundry. For example, the external device 2 may include the drum 30 to accommodate the laundry therein. The external device 2 may be equipped with the further controller 3 for controlling various devices disposed in the external device 2, separately from the controller 90 of the laundry treating apparatus 1 according to an embodiment of the present disclosure.

In addition, the external device 2 may include a further output device 4 that outputs a screen to provide information related to an operation situation or a laundry treatment state controlled by the further controller 3.

The laundry treating apparatus 1 according to an embodiment of the present disclosure may perform the washing course of the laundry, and the external device 2 may perform the drying course of the laundry.

The opposite case may also be possible, and both the laundry treating apparatus 1 according to an embodiment of the present disclosure and the external device 2 may perform the laundry washing course or the drying course.

In an embodiment of the present disclosure, a communication scheme by which the controller 90 and the external device 2 exchange the information may vary. For example, controller 90 may be in direct communication with the further communication unit of the external device 2 via the communication unit in a scheme, such as Bluetooth.

In addition, the controller 90 or the communication unit may be equipped separately from the laundry treating apparatus 1 according to an embodiment of the present disclosure and the external device 2, and may exchange the information via an external communication medium 96 that provides signals for communication.

For example, the external communication medium 96 may generate a Wi-Fi signal, and the controller 90 may exchange the information with the external communication medium 96 based on the Wi-Fi signal. The further controller 3, which is disposed in the external device 2 and distinct from the controller 90 of the laundry treating apparatus 1 according to an embodiment of the present disclosure, may receive signals transmitted from the controller 90 via information exchange with the external communication medium 96.

When the controller 90 directly generates the signal as above and when the external communication medium 96 is used as the signal generation means, a collection path of the information transmitted externally from the controller 90 or the information received by the controller 90 may also vary.

For example, even when the controller 90 directly transmits or receives the signal, the controller 90 may directly transmit the signal to the further controller 3 of external device 2, or a scheme in which the signal is transmitted to an external server 97 and the further controller 3 receives the signal from the server 97 may be used.

Even when the controller 90 uses the external communication medium 96, the information transmitted from the controller 90 to the external communication medium 96 may be directly transmitted to the external device 2, or the information transmitted to the external communication medium 96 may be transmitted to the server 97 and then is the further controller 3 of the external device 2 may receive the information from the server 97.

In one example, a relationship between a sender and a receiver may be changed between the controller 90 disposed in the laundry treating apparatus 1 according to an embodiment of the present disclosure and the further controller 3 of the external device 2.

In one example, the laundry treating apparatus 1 according to an embodiment of the present disclosure may also be permitted to be in communication with the user's terminal 95 described above. For example, the controller 90 may provide information related to the current operating state to the user via the terminal 95, and a remote control mode controlled based on a command transmitted from the terminal 95 may be activated via the information exchange with the terminal 95.

A communication or information exchange scheme between the controller 90 and the terminal 95 may be the same as the communication or information exchange scheme between the controller 90 and the further controller 3 described above. For example, the controller 90 may exchange the information directly with the terminal 95, or may exchange the information via the external communication medium 96 and/or the server 97.

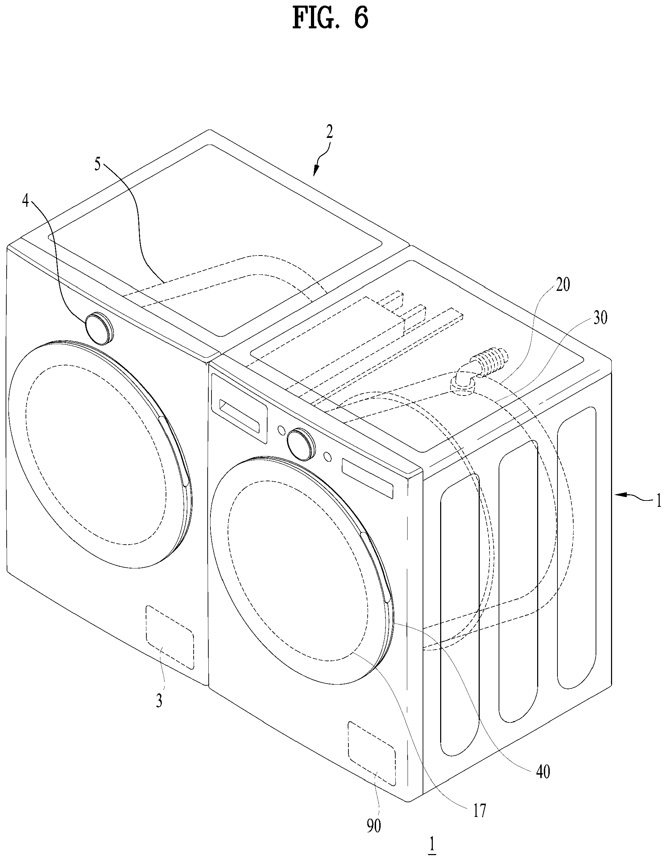

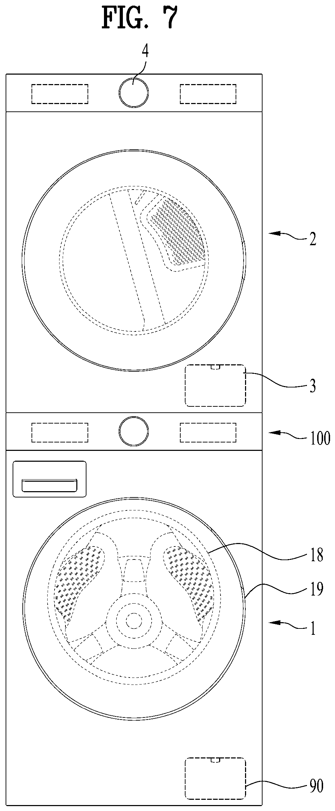

FIG. 6 shows the laundry treating apparatus 1 installed in parallel with the external device 2 and activating the pairing mode according to an embodiment of the present disclosure, and FIG. 7 shows the laundry treating apparatus 1 installed in series with the external device 2 and activating the pairing mode according to an embodiment of the present disclosure.

Referring to FIGS. 6 and 7, the laundry treating apparatus 1 according to an embodiment of the present disclosure may be connected in a signal manner to the external device 2 located externally and activate the pairing mode in which the information is exchanged via the mutual communication.

The external device 2 may perform the external treatment course for treating the laundry similar to the laundry treating apparatus 1 according to an embodiment of the present disclosure. The external device 2 may include the drum 5 for accommodating the laundry therein, similar to the laundry treating apparatus 1, may include the further controller 3 for controlling various electrical components of the external device 2, and may include the further output device 4 that provides the information on the operating state or the like of the external device 2 to the user.

The laundry treating apparatus 1 according to an embodiment of the present disclosure may perform a plurality of treatment courses for treating the laundry, and the external device 2 may also perform a plurality of external treatment courses for treating the laundry.

For example, the plurality of treatment courses may include the washing course, and the plurality of external treatment courses may include the drying course. However, the plurality of external treatment courses are not necessarily different from the plurality of treatment courses.

The laundry treating apparatus 1 according to an embodiment of the present disclosure may activate the pairing mode to be informationally associated with the external device 2. To activate the pairing mode, the laundry treating apparatus 1 and the external device 2 may have an installation relationship recommended for ensuring communication stability and product use.

For example, the laundry treating apparatus 1 and the external device 2 may be disposed side by side on the ground as shown in FIG. 6, or may have an arrangement relationship in which they are stacked on top of each other in a vertical direction as shown in FIG. 7.

When the arrangement design recommendations for ensuring the communication stability are met as described above, the laundry treating apparatus 1 may be permitted to activate the pairing mode with the external device 2.

Whether the arrangement conditions between the laundry treating apparatus 1 and the external device 2 are met may be identified via a detector or the like. For example, the laundry treating apparatus 1 may be equipped with one of a signal generator that generates a specific signal and a signal detector that detects the specific signal, and the external device 2 may be equipped with the other of the signal generator and the signal detector. As a result, when the signal detector detects the specific signal, the controller 90 may determine that the arrangement conditions are met.

However, a scheme of determining whether the laundry treating apparatus 1 according to an embodiment of the present disclosure meets the arrangement conditions with the external device 2 may vary, and the arrangement conditions between the laundry treating apparatus 1 and the external device 2 may also be set variously in addition to the arrangement relationships shown in FIGS. 6 and 7.

In one example, the controller 90 may be permitted to be in communication with the further controller 3 of the external device 2 in the pairing mode, so that the controller 90 may exchange the information on the operating state of each device or the laundry treatment process and reflect the information in the operating process or may inform the user of the information.

For example, the user may check the operating state of the external device 2 while using the laundry treating apparatus 1 according to an embodiment of the present disclosure, or may set the treatment course to be performed in the laundry treating apparatus 1 by reflecting the treatment process performed in the external device 2.

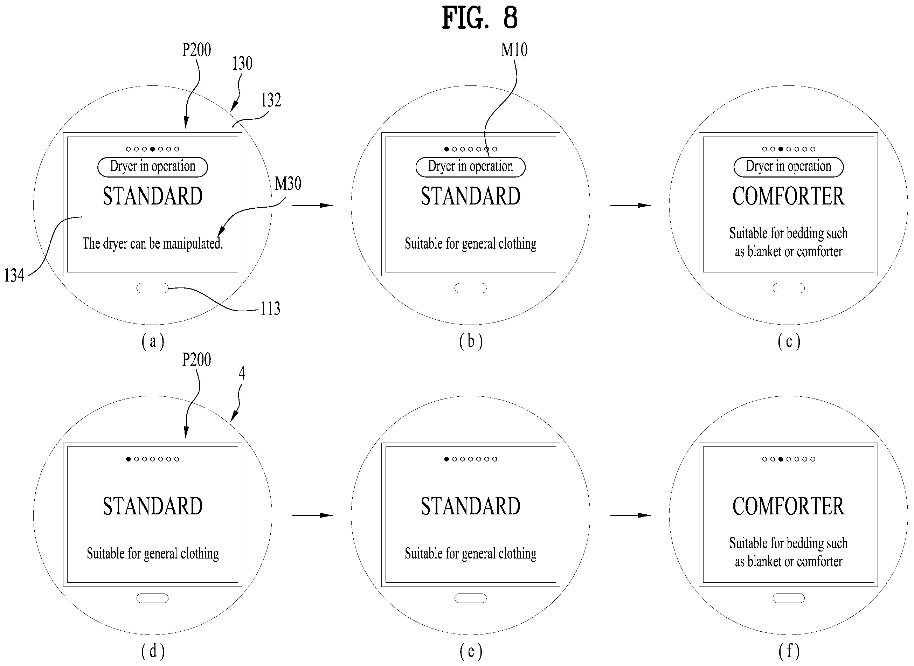

FIG. 8 is a diagram showing a screen output from the output device 130 when the pairing control mode is activated in the laundry treating apparatus 1 according to an embodiment of the present disclosure.

Referring to FIG. 8, the laundry treating apparatus 1 according to an embodiment of the present disclosure may activate the pairing control mode, and in the pairing control mode, the output device 130 may output a course selection screen P200 to select a treatment course for selecting the external treatment course of the external device 2.

Specifically, the laundry treating apparatus 1 according to an embodiment of the present disclosure may include the cabinet 10, the drum 30, the controller 90, the input device 110, and the output device 130, as described above.

The drum 30 may be rotatably disposed inside the cabinet 10 and may accommodate the laundry therein. The laundry accommodated inside the drum 30 may undergo the necessary treatment process via the above-described treatment course.

The controller 90 may be disposed inside the cabinet 10 and may perform the treatment course to treat the laundry. For example, the controller 90 may perform the washing course, the drying course, and the like of the laundry while controlling the driver 35, the detergent supplier 40, the heater 50, and the like described above.

The input device 110 may be disposed on the cabinet 10, and the command by the user may be input via the input device 110. The input device 110 may include the pairing control button 114 described above. The output device 130 may be disposed on the cabinet 10 and may output the screen that provides the information to the user. The screen may be output via the display 134.

The controller 90 may be located outside the cabinet 10 and activate the pairing control mode to control the external device 2 in which the external treatment course to treat the laundry is performed, and the output device 130 may output the course selection screen P200 on which the external treatment course is set via the input device 110 in the pairing control mode simultaneously with the further output device 4 disposed in the external device 2.

The pairing control mode refers to a state in which the user directly controls the operation of the external device 2 via the input device 110 of the laundry treating apparatus 1. Via the pairing control mode, the user may effectively manipulate the external device 2, which is difficult to be manipulated as it is away from the laundry treating apparatus 1 or is stacked on top of the laundry treating apparatus 1.

Additionally, the output device 130 may output the course selection screen P200 for operating the external device 2 in the pairing control mode. That is, the output device 130 may output the course selection screen P200 for selecting the external treatment course to be performed in the external device 2 rather than the treatment course of the laundry treating apparatus 1, and the user may effectively select and proceed with the external treatment course via the manipulation of the input device 110.

The course selection screen P200 output via the output device 130 in the pairing control mode as above will be described with reference to FIG. 8 as follows.

First, (a), (b), and (c) in FIG. 8 show the course selection screen P200 output from the output device 130 of the laundry treating apparatus 1 in the pairing control mode, and (d), (e), and (f) in FIG. 8 show the course selection screen P200 output from the further output device 4 equipped on the external device 2.

In addition, a screen output on the further output device 4 while the screen in (a) in FIG. 8 is output on the output device 130 may correspond to (d) in FIG. 8, a screen output on the further output device 4 while the screen in (b) in FIG. 8 is output on the output device 130 may correspond to (e) in FIG. 8, and a screen output on the further output device 4 while the screen in (c) in FIG. 8 is output on the output device 130 may correspond to (f) in FIG. 8.

In the pairing control mode, the output device 130 may output the course selection screen P200 for selecting and setting the external treatment course of the external device 2 simultaneously with the further output device 4. Accordingly, the user may conveniently control the external device 2 without directly checking the further output device 4 of the external device 2 while selecting and setting the external treatment course of the external device 2 via the pairing control mode.

In addition, while outputting the course selection screen P200 based on the pairing control mode on the output device 130, the laundry treating apparatus 1 according to an embodiment of the present disclosure may output the screen providing the same information on the further output device 4, so that the fact that the external device 2 is in the pairing control mode may be effectively identified, and a course selection process of the external device 2 may be conveniently checked also via the further output device 4.

For example, when the laundry treating apparatus 1 and the external device 2 are located in spaces separated from each other, or when it is difficult for the user to check the respective screens of the output device 130 and the further output device 4 at the same time, the user may conveniently select and set the external treatment course while viewing the screen output from the output device 130, and furthermore, even when it is difficult to check the screen of the output device 130, may effectively check, via the screen of the further output device 4, the situation controlled via the laundry treating apparatus 1.

In an embodiment of the present disclosure, the output device 130 may output the course selection screen P200 including a pairing control indicator M10 notifying the user that the pairing control mode is activated.

That is, the course selection screen P200 output from the output device 130 may include the pairing control indicator M10. The course selection screen P200 output from the output device 130 may include the pairing control indicator M10 in addition to the information of the course selection screen P200 output from the further output device 4.

For example, the course selection screen P200 output from the output device 130 may include the same information as that of the course selection screen P200 output from the further output device 4, but may further include or differently display a specific indication or specific information based on the pairing control mode.

(a) in FIG. 8 shows the course selection screen P200 output from the output device 130 in the pairing control mode, and (d) in FIG. 8 shows the course selection screen P200 output from the further output device 4 in the situation in which the same course selection screen P200 in (a) in FIG. 8 is output from the output device 130.

That is, in the pairing control mode, the further output device 4 may output the course selection screen P200 excluding the pairing control indicator M10.

In one example, the course selection screen P200 of the output device 130 may include a pairing start indicator M30, which will be described later, as shown in (a) in FIG. 8, and the course selection screen P200 from which the pairing start indicator M30 has disappeared may be displayed as shown in (b) in FIG. 8.

Both the course selection screens P200 output from the output device 130 and the further output device 4 may include a course name of the external treatment course currently selected among the plurality of external treatment courses, and a brief description of the corresponding external treatment course.

In the course selection screens P200 of the output device 130 and the further output device 4, the brief description may disappear and setting values of an option for the corresponding external treatment course may be displayed, as will be described later.

When the user changes the external treatment course to be selected via the input device 110 on the course selection screen P200 on which one external treatment course is displayed as shown in (b) in FIG. 8, the output device 130 may be changed to display another external treatment course as shown in (c) in FIG. 8.

In one example, when the course selection screen P200 as shown in (b) in FIG. 8 is output from the output device 130, the further output device 4 may output the course selection screen P200 that displays the same course name as that in the course selection screen P200 of the output device 130 as shown in (e) in FIG. 8.

When the external treatment course is changed from (b) in FIG. 8 to (c) in FIG. 8 on the course selection screen P200 of the output device 130, the further output device 4 may also output the course selection screen P200, which changes from (e) in FIG. 8 to (f) in FIG. 8 to be the same as that of the output device 130.

That is, in the course selection process in which the course selection screens P200 are output on the output device 130 and the further output device 4 and the user selects the desired external treatment course via the input device 110, the output device 130 and the further output device 4 may simultaneously output the course selection screens P200, which provide the same information on the treatment course.

In one example, in the pairing control mode, the course selection screen P200 of the output device 130 may include the pairing control indicator M10, unlike that of the further output device 4, and the further output device 4 may output the course selection screen P200 with the pairing control indicator M10 excluded.

An embodiment of the present disclosure may display the pairing control indicator M10 on the course selection screen P200 output from the output device 130, thereby allowing the user to conveniently identify that the external device 2 rather than the laundry treating apparatus 1 is paired and controlled.

In one example, the pairing control indicator M10 may be omitted from the course selection screen P200 of the external device 2, so that the external device 2 may be recognized as being directly controlled, thereby reducing a sense of heterogeneity in the pairing control mode that the user may feel.

The pairing control indicator M10 may have various shapes and may be displayed in various schemes. For example, the pairing control indicator M10 may be disposed on a portion of the course selection screen P200 similar to as shown in FIG. 8 and may include a phrase that allows the user to recognize that the pairing control mode is activated.

However, in an embodiment of the present disclosure, the laundry treating apparatus 1 and the external device 2 may be interchanged. For example, the laundry treating apparatus 1 according to an embodiment of the present disclosure may be controlled as the pairing control mode is activated by the further controller 3 of the external device 2.

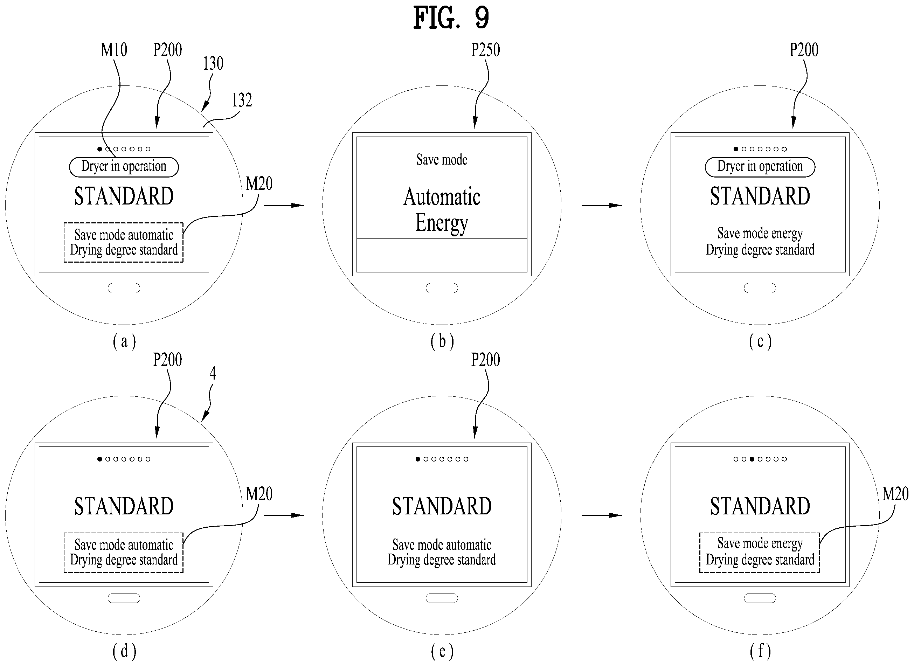

FIG. 9 shows a process of outputting an option setting screen P250 to which the output device 130 switches from the course selection screen P200 in the pairing control mode, and shows a screen of the further output device 4 corresponding to the screen change of the output device 130.

(a), (b), and (c) in FIG. 9 show changes in the screen output from the output device 130, and (d), (e), and (f) in FIG. 9 show changes in the screen output from the further output device 4.

When a screen in (a) in FIG. 9 is output on the output device 130, a screen in (d) in FIG. 9 may be output on the further output device 4, when a screen in (b) in FIG. 9 is output on the output device 130, a screen in (e) in FIG. 9 may be output on the further output device 4, and when a screen in (c) in FIG. 9 is output on the output device 130, a screen in (f) in FIG. 9 may be output on the further output device 4.

Referring to FIG. 9, in an embodiment of the present disclosure, when a change in the option is input via the input device 110 or the user's terminal 95 on the course selection screen P200, the output device 130 may output the option setting screen P250 for changing a setting value of the option, and the further output device 4 may maintain the course selection screen P200.

In the pairing control disclosure mode, the user may change the external treatment course of the external device 2 displayed on the course selection screen P200 via the input device 110 of the laundry treating apparatus 1 according to an embodiment of the present or the user's terminal 95.

Additionally, in an embodiment of the present disclosure, the user may change the setting value of each option for the external treatment course by manipulating the option setting unit 115 or the like of the input device 110 on the course selection screen P200 or the like.

That is, the course selection screen P200 on which one of the plurality of external treatment courses is displayed as the object to be selected as shown in (a) in FIG. 9 may include an option display area M20 where the setting value of each option is displayed.

Both the output device 130 and the further output device 4 may output the course selection screen P200 including the option display area M20 as shown in (a) and (d) in FIG. 9.

When a command to change the setting value of the option is input via the input device 110 or the terminal 95 on the course selection screen P200, the output device 130 may output the option setting screen P250 for changing the setting value of the option for the corresponding external treatment course as shown in (b) in FIG. 9.

The option setting screen P250 may display a name of an option subject to adjustment in the corresponding external treatment course, and a plurality of option values preset in the controller 90 for the corresponding option. The user may select one of the plurality of option values displayed on the option setting screen P250 and set the same as the setting value for the corresponding option.

In one example, when the screen of the output device 130 switches from the course selection screen P200 to the option setting screen P250, the screen of the further output device 4 may maintain the same course selection screen P200 as shown in (d) and (e) in FIG. 9.

Accordingly, while conveniently checking the option currently being adjusted and the option value thereof via the output device 130 of the laundry treating apparatus 1 according to an embodiment of the present disclosure, the user may conveniently check which external treatment course the setting value of the current option is being adjusted for and what the current setting value is via the course selection screen P200 output on the further output device 4 of the external device 2.

In one example, in an embodiment of the present disclosure, the setting value of the option may be displayed on the course selection screen P200, and when the output device 130 returns from the option setting screen P250 to the course selection screen P200, the setting value displayed on the course selection screen P200 of the further output device 4 may be changed to a value determined on the option setting screen P250 of the output device 130.

When the setting value for one option is completely changed via the user's command, the output device 130 may switch from the option setting screen P250 back to the course selection screen P200, as shown in (b) and (c) in FIG. 9.

In this regard, a setting value of the option determined via the option setting screen P250 may be displayed in the option display area M20 of the course selection screen P200.

In one example, in the situation in which the screen of the output device 130 switches from the course selection screen P200 to the option setting screen P250, the further output device 4 may still maintain the course selection screen P200 as shown in (e) in FIG. 9. When the screen of the output device 130 returns from the option setting screen P250 back to the course selection screen P200, the further output device 4 may maintain the course selection screen P200 as shown in (e) and (f) in FIG. 9.

However, when the setting value of the option is changed to one of the plurality of option values via the option setting screen P250, the option display area M20 displayed on the course selection screen P200 of the further output device 4 may be changed to display the setting value of the option changed via the output device 130 and the input device 110 as shown in (f) in FIG. 9.

Accordingly, in an embodiment of the present disclosure, the further output device 4 of the external device 2 may continuously output the course selection screen P200 that displays the external treatment course that is to be selected during the process of setting the option by the user, but may reflect and display the setting value of the option determined by the user.

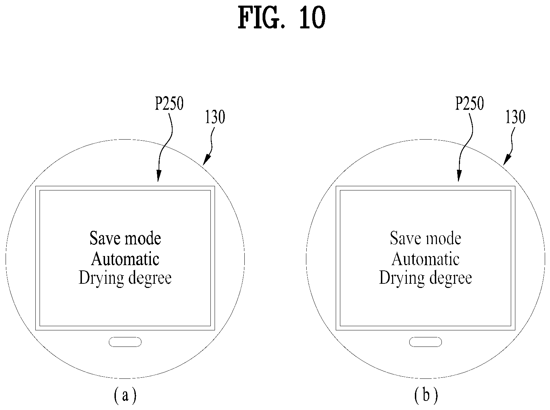

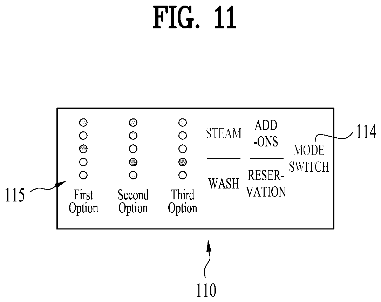

FIG. 10 shows an activated state and a deactivated state of one of a plurality of options for one external treatment course. Additionally, FIG. 11 shows the option setting unit 115 in which activated options and deactivated options are displayed differently.

Referring to FIGS. 10 and 11, in the laundry treating apparatus 1 according to an embodiment of the present disclosure, options that are not able to be changed via the input device 110 or the terminal 95 in the pairing control mode may be displayed in the deactivated state.

As described above, in an embodiment of the present disclosure, an option adjustment screen that may adjust the setting values of the plurality of options for each of the treatment course of the laundry treating apparatus 1 and the external treatment course of the external device 2 (the laundry treating apparatus 1 may correspond to the external device 2) may be output via the output device 130.

However, in the pairing control mode, each of the external treatment courses may include options that are not be able to be adjusted in the laundry treating apparatus 1.

For example, when the laundry treating apparatus 1 according to an embodiment of the present disclosure is capable of performing the washing course and the external device 2 is a dryer capable of performing the drying course, the drying course as the external treatment course may have a drying degree option, but the input device 110 of the laundry treating apparatus 1 may not have a button or the like for adjusting a drying degree.

In addition, some of the external treatment courses may be set to prevent the user from arbitrarily changing the option setting values preset in the controller 90.

For various reasons as above, there may be the options for the external treatment course that are not able to be changed by the user, and in this case, the controller 90 may display that the corresponding options are in the deactivated state.

(a) in FIG. 10 shows a settable state for a 'save mode' option as one of the plurality of options, and (b) in FIG. 10 shows a non-settable state for the 'save mode' option.

As shown in FIG. 10, the controller 90 may control the output device 130 to express the settable options and the non-settable options among the plurality of options displayed on the option setting screen P250 with differences that the user may identify, such as a difference in letter brightness.

However, in an embodiment of the present disclosure, various schemes that allow the user to distinguish between the activated and deactivated options via expression of the output device 130 are available in addition to the letter brightness.

FIG. 11 shows the option setting unit 115 of the manipulation unit 100 according to an embodiment of the present disclosure. The option setting unit 115 may enable adjustment of each plurality of options.

In FIG. 11, a first option, a second option, and a third option are shown as an example for illustrating the present disclosure, and a state in which the first option and the second option are turned off and the third option is turned on and thus the first option and the second option are in the deactivated state is shown.

As shown in FIG. 11, in an embodiment of the present disclosure, the controller 90 may control the manipulation unit 100 to display options that are not able to be changed to the user by turning off the first and second options for which the user is not able to change the setting value for the currently selected external treatment course, and deactivate adjustment buttons for the corresponding options.

An embodiment of the present disclosure may improve convenience of the user in an option setting process by displaying the options that are not able to be changed by the user on the output device 130, the input device 110, and the terminal 95 so as to be recognized by the user.

Referring again to FIG. 8, in an embodiment of the present disclosure, when a pairing control request for the external device 2 is input via the input device 110 or the user's terminal 95, the output device 130 may output the pairing start indicator M30, which notifies the user of start of the pairing control mode, for a preset time.

Specifically, when the pairing control request is input from the user via the pairing control button 114 of the input device 110, the terminal 95, or the like, the controller 90 may activate the pairing control mode to control the external device 2, and may control the output device 130 such that the pairing start indicator M30 is output on the screen with the start of the pairing control mode.

In one example, the pairing start indicator M30 may be output in a form of a pop-up on the screen currently displayed on the output device 130. (a) in FIG. 8 shows the pairing start indicator M30 including a phrase notifying the start of the pairing control mode according to an embodiment of the present disclosure displayed on the course selection screen P200.

The output device 130 may be controlled by the controller 90 such that the pairing start indicator M30 disappears after being displayed for a certain period of time, as shown in (a) and (b) in FIG. 8. The pairing start indicator M30 may disappear after being displayed in a pop-up form for a preset time to avoid inconvenience to the user during the course selection process using the existing screen, such as the course selection screen P200.

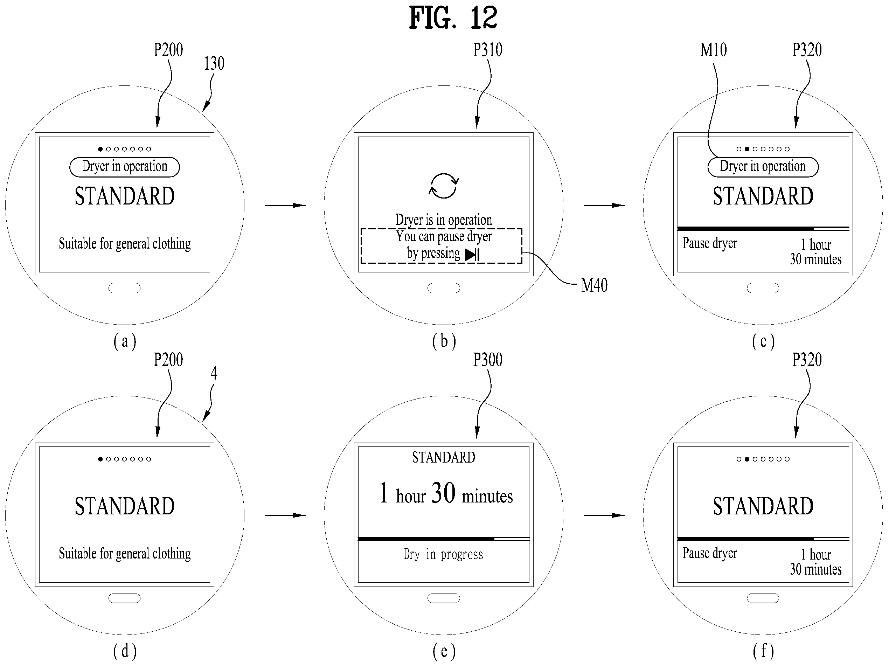

FIG. 12 shows screens output on the output device 130 of the laundry treating apparatus 1 and the further output device 4 of the external device 2 during a course performing process in which the external treatment course of the external device 2 is performed in an embodiment of the present disclosure.

(a), (b), and (c) in FIG. 12 show changes in the screen output on the output device 130, and (d), (e), and (f) in FIG. 12 show changes in the screen output on the further output device 4.

When a screen in (a) in FIG. 12 is output on the output device 130, a screen in (d) in FIG. 12 may be output on the further output device 4, when a screen in (b) in FIG. 12 is output on the output device 130, a screen in (e) in FIG. 12 may be output on the further output device 4, and when a screen in (c) in FIG. 12 is output on the output device 130, a screen in (f) in FIG. 12 may be output on the further output device 4.

Referring to FIG. 12, in an embodiment of the present disclosure, when the further output device 4 outputs a course performance screen P300 that displays a progress of the external treatment course in the pairing control mode, the output device 130 may output an operation notification screen P310 displaying that the external device 2 is operating.

Specifically, when the course selection screen P200 is output on the output device 130 based on the pairing control mode as shown in (a) in FIG. 12, the further output device 4 of the external device 2 may output the course selection screen P200 together with the output device 130 as shown in (d) in FIG. 12.

In one example, when the user inputs a command to perform the external treatment course displayed on the course selection screen P200 via the perform button 112 of the input device 110, the terminal 95, or the like while the course selection screen P200 is output on the output device 130, the further output device 4 may output the course performance screen P300 showing the progress of the external treatment course, as shown in (e) in FIG. 12.

On the other hand, the laundry treating apparatus 1 activating the pairing control mode may output the operation notification screen P310 displaying that the external device 2 is operating for the laundry treatment as shown in (b) in FIG. 12, instead of the course progress screen P300, on the output device 130.

The operation notification screen P310 may display the external device 2 that is operating via the pairing control mode, and accordingly, a fact that an entity for which the external treatment course is currently set via the output device 130 and the input device 110 and performed is the external device 2 may be conveniently indicated to the user.

In other words, in an embodiment of the present disclosure, when the external treatment course is performed in the external device 2 via the activation of the pairing control mode by the laundry treating apparatus 1, the further output device 4 may directly output the course performance screen P300 and the output device 130 may output the operation notification screen P310, thereby effectively indicating to the user that a controlling entity is the laundry treating apparatus 1 and an operating entity is the external device 2. Further, on the contrary, a case in which the controlling entity is the external device 2 and the operating entity is the laundry treating apparatus 1 is also available.

In one example, as shown in (b) in FIG. 12, in an embodiment of the present disclosure, the operation notification screen P310 may include a pause indicator M40 that indicates that the operation of the external device 2 may be paused via the input device 110 or the user's terminal 95.

In the situation in which the external treatment course is in progress, like in the external device 2, the input device 110 of the laundry treating apparatus 1 may also ignore the input signal of the user except for a specific button.

However, depending on a user's will, the external treatment course currently in progress may be required to be stopped, and therefore, the pause button may maintain the activated state on the input device 110 or the like.

In this regard, the pause button may be the same button as the perform button 112 described above, or may be distinguished and separated from the perform button 112.

An embodiment of the present disclosure may improve manipulation convenience of the user as the pause indicator M40 that may include a guide phrase on a method for pausing the course performing process of the external device 2 is disposed on the operation notification screen P310 output from the output device 130.

In one example, in an embodiment of the present disclosure, when a pause request is input via the input device 110 or the user's terminal 95 while the operation notification screen P310 is output, the output device 130 may output a pause screen P320 of the external device 2 together with the further output device 4.

Specifically, when the user pauses the external treatment course via the input device 110 of the laundry treating apparatus 1 in the course performing process of the external device 2, the further output device 4 may be switched from the course performance screen P300 to the pause screen P320 as shown in (e) and (f) in FIG. 12. In one example, the output device 130 may be switched from the operation notification screen P310 described above to the pause screen P320, as shown in (b) and (c) in FIG. 12.

In other words, in an embodiment of the present disclosure, the output device 130 and the further output device 4 may output the different screens in the course performing process in which the external treatment course is performed in the external device 2, and when the pause is requested from the user in the course performing process, the output device 130 and the further output device 4 may again output the pause screen P320 providing the same information together.

As in the course selection screen P200 described above, the output device 130 may display the pairing control indicator M10 displaying that the pairing control mode is currently being performed and that an object to be controlled is the external device 2 rather than the laundry treating apparatus 1 on the pause screen P320.

In one example, in an embodiment of the present disclosure, when the pairing control request for activating the pairing control mode is input via the input device 110 or the user's terminal 95 in in the paired state in which the communication with the external device 2 is permitted, the controller 90 may activate the pairing control mode.

As described above, the pairing control mode may be permitted between the mutually paired devices, and therefore, the controller 90 may activate the paring control mode when the pairing control button 114 or the like of the input device 110 is pressed for the external device 2 to which the pairing mode is permitted.

In one example, when the pairing control request is input via the input device 110 or the terminal 95 in the sleep state of the external device 2, the controller 90 may make a request for the wake-up state to the further controller 3 to activate the pairing control mode.

Specifically, as described above, in an embodiment of the present disclosure, the controller 90 may include a plurality of functional and/or sub-divided components, and the plurality of functional and/or sub-divided components may include the power standby unit.

As described above, the power standby unit may receive the power from the outside at all times even when not in the power-on state in which the power button 111 of the input device 110 is pressed. When the power button 111 is pressed, the power may be allowed to be applied to various power consumption devices other than the power standby unit because of the power standby unit.

That is, the laundry treating apparatus 1 according to an embodiment of the present disclosure may be switched from the standby state or the sleep state in which the power is supplied only to the power standby unit to the power-on state or the wake-up state in which the power is supplied to other components under the control of the power standby unit when the application of the power is requested.

In one example, in an embodiment of the present disclosure, when the request for the pairing control mode is input to the controller 90 while the external device 2 is waiting in the standby state, the controller 90 may make a request for the power-on state or the wake-up state to the further controller 3 of the external device 2, and the further controller 3 may be switched to the power-on state or the wake-up state and prepare for setting and proceeding with the external treatment course even when the user does not manipulate the power button 111 of the external device 2.

In one example, in an embodiment of the present disclosure, after the treatment course is performed in the pairing state, a recommended external treatment course for the treatment course among the plurality of external treatment courses may be suggested to the user via the output device 130, the further output device 4, or the terminal 95.

In an embodiment of the present disclosure, a function that is in relation to the treatment course of the laundry treating apparatus 1 and the external treatment course of the external device 2 and suggested to the user via the controller 90 or the further controller 3 is defined as a course pairing function.

The course pairing function may be permitted between the devices in the mutually paired state. For example, as described above, when the laundry treating apparatus 1 according to an embodiment of the present disclosure is already paired with the external device 2, the further controller 3 of the external device 2 may suggest an appropriate external treatment course to the user when the treatment course of the laundry treating apparatus 1 is performed, and the controller 90 of the laundry treating apparatus 1 may suggest an appropriate treatment course to the user when the external treatment course of the external device 2 is performed.

Such course pairing function may be available even without activating the pairing control mode described above, and the treatment course suggestion of the controller 90 may be provided to the user in various ways via the output device 130, the further output device 4, or the terminal 95.

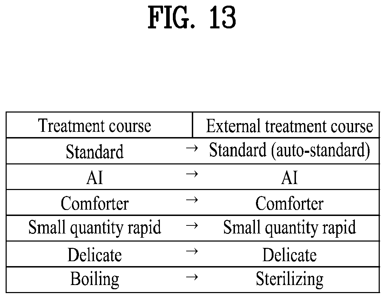

In FIG. 13, an example of a suggestion relationship between the treatment course and the external treatment course in the course pairing function performed by the controller 90 or the further controller 3 is shown as a table.

The controller 90 or the further controller 3 may recommend, for a preceding course performed preveniently in one of the laundry treating apparatus 1 and the external device 2, a subsequent course performed in conjunction with the preceding course in the other of the laundry treating apparatus 1 and the external device 2.

The controller 90 or the further controller 3 may recommend the subsequent course related to characteristics of the preceding course, and such relationship between the preceding course and the subsequent course may be mapped in advance and stored in the controller 90 or the further controller 3, as shown in FIG. 13.

For example, when an 'artificial intelligence course' incorporating an AI function is performed as the preceding course, the controller 90 or the further controller 3 may suggest the 'artificial intelligence course' incorporating the AI function as the subsequent course to the user.

In addition, when a blanket course specialized in blanket washing is performed as the preceding course, the blanket course specialized in blanket treatment may also be suggested as the subsequent course, and when a 'rapid course' specialized in time reduction is performed as the preceding course, the 'rapid course' may also be suggested as the performance course.

Likewise, when a 'boiling course' including a sterilizing effect of the laundry is performed as the preceding course, a 'sterilizing course' having the sterilizing effect may be suggested as the subsequent course.

As above, the controller 90 and the further controller 3 may suggest the subsequent course has the same or similar effects and characteristics as the preceding course to the user. When the subsequent course with the same functions and effects as the preceding course does not exist, the subsequent course that may have the similar functions and effects may be suggested to the user.

As such, the laundry treating apparatus 1 according to an embodiment of the present disclosure may provide the course pairing function to the user via the controller 90 or the further controller 3, so that the beneficial effects of the pairing mode in which the information exchange between the laundry treating apparatus 1 and the external device 2 is permitted may be maximized.

In one example, the laundry treating apparatus 1 according to an embodiment of the present disclosure may include the above-described tub 20, the treatment course of the controller 90 may correspond to the washing course for washing the laundry, and the external treatment course of the external device 2 may correspond to the drying course for drying the laundry.

That is, in an embodiment of the present disclosure, the plurality of treatment courses that may be performed in the laundry treating apparatus 1 may include the treatment courses related to the washing of the laundry, and the plurality of external treatment courses that may be performed in the external device 2 may include the external treatment courses related to the drying of the laundry.

Accordingly, after the washing course is performed as the preceding course in the laundry treating apparatus 1 according to an embodiment of the present disclosure, the controller 90 or the further controller 3 may suggest an optimal drying course in association with the washing course performed in the laundry treating apparatus 1 as the subsequent course of the external device 2, so that user's convenience in treating the laundry may be effectively improved.

However, in an embodiment of the present disclosure, even when the laundry treating apparatus 1 performs the drying course and the external device 2 performs the washing course, after the washing course of the external device 2 is performed, the controller 90 may suggest an optimal drying course via the course pairing function.

Although the present disclosure is shown and described in relation to the specific embodiment, it will be obvious to those skilled in the art that the present disclosure may be improved and changed in various ways without departing from the technical spirit of the present disclosure provided by the following patent claims.

## Claims

1. A laundry treating apparatus comprising:
a cabinet;
a drum rotatably disposed inside the cabinet and configured to accommodate laundry therein;
a controller disposed inside the cabinet and configured to perform a treatment course for treating the laundry;
an input device disposed on the cabinet, wherein a command is input by a user via the input device; and
an output device disposed on the cabinet and configured to output a screen providing information to the user,
wherein the controller is located outside the cabinet and activates a pairing control mode to control an external device performing an external treatment course to treat the laundry,
wherein the output device outputs a course selection screen where the external treatment course is set via the input device in the pairing control mode,
wherein the course selection screens are simultaneously output from the output device and a further output device disposed on the external device.

2. The laundry treating apparatus of claim 1, wherein the course selection screen output from the output device includes a pairing control indicator indicating the pairing control mode.

3. The laundry treating apparatus of claim 2, wherein the course selection screen output from the further output device does not include the pairing control indicator.

4. The laundry treating apparatus of claim 1, wherein when a change in an option is input via the input device or a user's terminal on the course selection screen, the output device outputs an option setting screen for changing a setting value of the option and the further output device maintains the course selection screen.

5. The laundry treating apparatus of claim 4, wherein the course selection screen displays the setting value of the option, wherein when the output device returns to the course selection screen from the option setting screen, the setting value displayed on the course selection screen of the further output device is changed to a value determined on the option setting screen of the output device.

6. The laundry treating apparatus of claim 4, wherein an option unchangeable via manipulation of the input device or the terminal is displayed in a deactivated state in the pairing control mode.

7. The laundry treating apparatus of claim 1, wherein when a pairing control request for the external device is input from the input device or a user's terminal, the output device outputs a pairing start indicator indicating start of the pairing control mode.

8. The laundry treating apparatus of claim 7, wherein the pairing start indicator is output in a pop-up form on the screen currently output on the output device.

9. The laundry treating apparatus of claim 1, wherein when the further output device outputs a course performance screen displaying a progress of the external treatment course in the pairing control mode, the output device outputs an operation notification screen displaying that the external device is operating.

10. The laundry treating apparatus of claim 9, wherein the operation notification screen includes a pause indicator indicating that the operation of the external device is able to be paused via the input device or a user's terminal.

11. The laundry treating apparatus of claim 10, wherein when a pause request is input via the input device or the user's terminal while the operation notification screen is output, the output device outputs a pause screen of the external device together with the further output device.

12. The laundry treating apparatus of claim 1, wherein when a pairing control request is input via the input device or a user's terminal in a paired state where communication with the external device is permitted, the controller activates the pairing control mode.

13. The laundry treating apparatus of claim 12, wherein when the pairing control request is input via the input device or the terminal in a sleep state of the external device, the controller makes a request for a wake-up state to a further controller disposed in the external device to perform the pairing control mode.

14. The laundry treating apparatus of claim 12, wherein the external treatment course includes a plurality of external treatment courses set on the external device,
wherein after the treatment course is performed in the paired state, a recommended external treatment course recommended based on the treatment course among the plurality of external treatment courses is suggested to the user via the output device, the further output device, or the terminal.

15. The laundry treating apparatus of claim 14, further comprising a tub disposed inside the cabinet, wherein the drum is installed inside the tub, wherein the tub is configured to accommodate water therein,
wherein the treatment course of the controller corresponds to a washing course for washing the laundry,
wherein the external treatment course of the external device corresponds to a drying course for drying the laundry.
